# EUROPEAN PATENT APPLICATION

(11) **EP 3 096 378 A1**
(43) Date of publication of application: **23.11.2016**
(21) Application number: 16166689.6
(22) Date of filing: 22.04.2016
(51) Int. Cl.: H01M 4/36, H01M 4/505, H01M 4/525, H01M 4/131, H01M 10/0525, H01M 4/587, H01M 2/02, H01M 4/133, H01M 4/62, H01M 4/02, H01M 10/0585

(54) **NONAQUEOUS ELECTROLYTE SECONDARY BATTERY**

(30) Priority: 18.05.2015 JP 2015101011
(71) Applicant: Automotive Energy Supply Corporation, Zama-shi, Kanagawa 252-0012 (JP)
(72) Inventor: Nakagawa, Takashi, Kanagawa, 252-0012 (JP)
(74) Representative: Herzog, Fiesser & Partner Patentanwälte PartG mbB

(57) **Abstract**

A nonaqueous electrolyte secondary battery according to an embodiment of the present disclosure includes: a negative electrode including, as a negative electrode active material, amorphous carbon coated graphite with charge-discharge efficiency of 93.5% or more; and a positive electrode including a positive electrode active material including a mixture containing a lithium manganese oxide (LMO) and a lithium nickel oxide (LNO) at a mass ratio (LMO : LNO) of 20 : 80 to 90 : 10.

## Description

### CROSS-REFERENCE TO RELATED APPLICATION

This application claims priority from Japanese Patent Application No. 2015-101011 filed with the Japan Patent Office on May 18, 2015, the entire content of which is hereby incorporated by reference.

### BACKGROUND

### 1. Technical Field

The present disclosure relates to a nonaqueous electrolyte secondary battery.

### 2. Related Art

In recent years, vehicles utilizing electric energy, such as electric vehicles and hybrid vehicles, have been put into practical use. Along with the development for the higher performance of such vehicles, the development for secondary batteries as the driving power source has been advanced. In particular, a nonaqueous electrolyte secondary battery such as a lithium ion secondary battery has been expected for its characteristics of high output, high capacity (high energy density), and long life.

In the development of nonaqueous electrolyte secondary batteries, improvement of charge-discharge efficiency of the negative electrode has been attempted. According to JP-A-2001-143691, the graphite carbon material with the surface coated with pyrolytic carbon is subjected to heat treatment at higher temperature than in the coating process. This causes the carbon material to have smaller specific surface area, thereby having the side reaction suppressed and achieving charge-discharge efficiency of 90% or higher.

### SUMMARY

A nonaqueous electrolyte secondary battery according to an embodiment of the present disclosure includes: a negative electrode including, as a negative electrode active material, amorphous carbon coated graphite with charge-discharge efficiency of 93.5% or more; and a positive electrode including a positive electrode active material including a mixture containing a lithium manganese oxide (LMO) and a lithium nickel oxide (LNO) at a mass ratio (LMO : LNO) of 20 : 80 to 90 : 10.

### BRIEF DESCRIPTION OF DRAWINGS

Fig. 1 is a perspective view illustrating a structure of a nonaqueous electrolyte secondary battery according to one embodiment of the present disclosure;
Fig. 2 is a sectional view illustrating a structure of a nonaqueous electrolyte secondary battery according to one embodiment of the present disclosure (taken along line A-A of Fig. 1); and
Fig. 3 is a graph representing the relation between the cell aging capacity efficiency and the LMO ratio of the positive electrode mixed active material of each negative electrode charge-discharge efficiency.

### DETAILED DESCRIPTION

In the following detailed description, for purpose of explanation, numerous specific details are set forth in order to provide a thorough understanding of the disclosed embodiments. It will be apparent, however, that one or more embodiments may be practiced without these specific details. In other instances, well-known structures and devices are schematically shown in order to simplify the drawing.

The charge-discharge efficiency of the entire nonaqueous electrolyte secondary battery is based on not just the charge-discharge efficiency of the negative electrode alone. A cell of the nonaqueous electrolyte secondary battery is formed by having a negative electrode and a positive electrode, which are opposite to each other with the separator interposed therebetween, and a nonaqueous electrolyte housed in a package and then sealing the package. The cell is initially charged and then if necessary, charged and discharged repeatedly. Alternatively, the cell in the highly charged state (the state is called SOC, state of charge) is left for several tens of hours to several tens of days under room temperature or high temperature (hereinafter referred to as "aging"). The nonaqueous electrolyte secondary battery is usually shipped after this charging and discharging or aging. Through such a process, however, the capacity of the nonaqueous electrolyte secondary battery will become the capacity (hereinafter this capacity referred to as "default capacity") which is lower than the initial capacity by a certain rate (hereinafter the rate is referred to as "aging capacity efficiency").

In the designs of the batteries, in addition to the charge-discharge efficiency of the negative electrode alone, the charge-discharge efficiency of the entire battery and the capacity designed to meet demand of the client are important. The capacity is designed based on the default capacity. Therefore, the designer does not have a choice but to set the amount of active material in consideration of the aging capacity efficiency, i.e., a little larger amount of active material because the capacity will decrease in the aging. Using more active material will increase the cost of the battery. In view of this, it is very important to improve the aging capacity efficiency.

An objective of the present disclosure is to provide a nonaqueous electrolyte secondary battery with the excellent aging capacity efficiency.

According to an aspect of the present disclosure, a nonaqueous electrolyte secondary battery is provided which includes: a negative electrode including, as a negative electrode active material, amorphous carbon coated graphite with charge-discharge efficiency of 93.5% or more; and a positive electrode including, as a positive electrode active material, a mixture containing lithium manganese oxide (LMO) and lithium nickel oxide (LNO) at a mass ratio (LMO : LNO) of 20 : 80 to 90 : 10.

According to an embodiment of the present disclosure, the nonaqueous electrolyte secondary battery with the maximized aging capacity efficiency can be provided.

A preferred embodiment of the present disclosure will hereinafter be described.

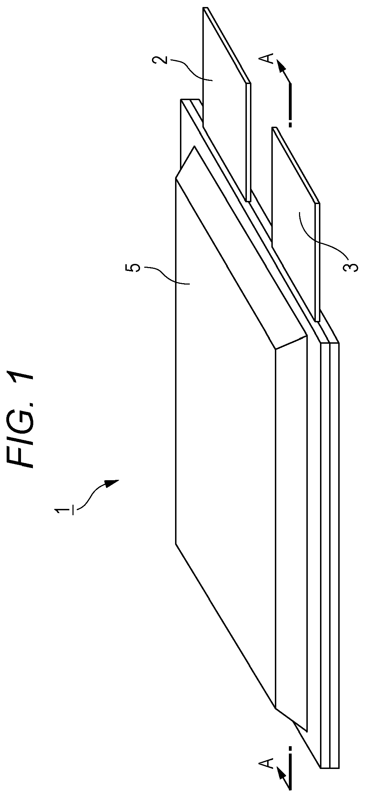

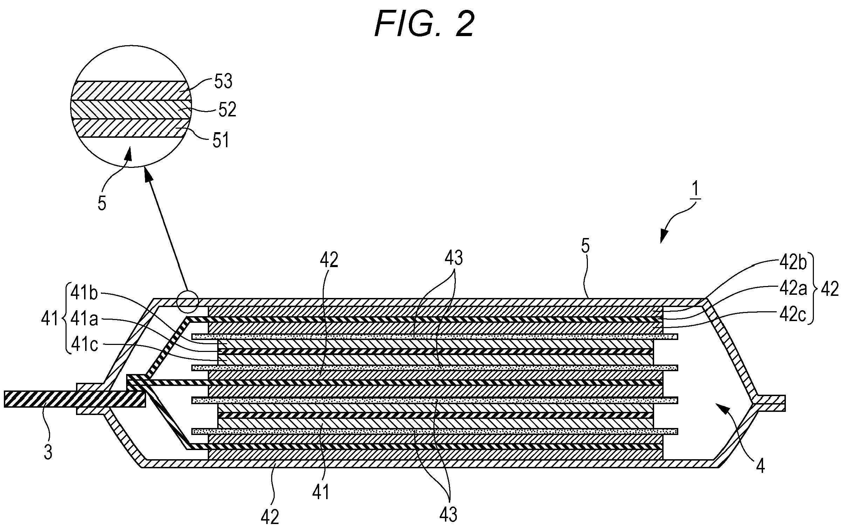

First, a structure of a nonaqueous electrolyte secondary battery according to the embodiment of the present disclosure is described with reference to the drawings. Here, an example of a lithium ion secondary battery is described. Fig. 1 is a perspective view of a battery 1, and Fig. 2 is a sectional view along the line A-A of Fig. 1.

As illustrated in Fig. 1, the battery 1 has a flat and rectangular parallelepiped external shape. A pair of terminals 2 and 3 protrudes from one edge of the battery 1 in a longitudinal direction.

As illustrated in Fig. 2, a power generating element 4 including positive electrode plates 41 and negative electrode plates 42, each plate 41 and each plate 42 being stacked with a separator 43 interposed therebetween, and an electrolyte solution are housed in a package container including a package 5. Specifically, the battery 1 includes three negative electrode plates 42, two positive electrode plates 41, and four separators 43 each interposed between the negative electrode plate 42 and the positive electrode plate 41. That is, in this example, the negative electrode plate 42 is located as each of two outermost layers of the power generating element 4. However, the power generating element may alternatively be configured so that the positive electrode plate 41 comes to the outermost layer of the power generating element 4. The size of each component in Figs. 1 and 2 may be exaggerated for the explanation.

The positive electrode plate 41 is obtained by forming a positive electrode active material layer 41b on one surface of a rectangular positive electrode current collector 41a, and a positive electrode active material layer 41c on the other surface of the rectangular positive electrode current collector 41a. Examples of the positive electrode current collector 41a include a positive electrode current collector formed of an electrochemically stable metal foil such as an aluminum foil, an aluminum alloy foil, a copper foil, or a nickel foil.

The negative electrode plate 42 is obtained by forming a negative electrode active material layer 42b on one surface of a rectangular negative electrode current collector 42a, and a negative electrode active material layer 42c on the other surface of the rectangular negative electrode current collector 42a. Examples of the negative electrode current collector 42a include a negative electrode current collector formed of an electrochemically stable metal foil such as a nickel foil, a copper foil, a stainless steel foil, or an iron foil.

A part of the edge of the negative electrode current collector 42a in the longitudinal direction extends as an extension part not having the negative electrode active material layer. An end of the extension part is bonded to a negative electrode terminal 3. Although not illustrated in Fig. 2, a part of the edge of the positive electrode current collector 41a in the longitudinal direction similarly extends as an extension part that does not have the positive electrode active material layer. An end of the extension part is bonded to a positive electrode terminal 2.

The thickness of each of the positive electrode current collector and the negative electrode current collector is usually set in the range of 1 to 100 µm.

The separator 43 prevents the short-circuiting between the positive electrode plate 41 and the negative electrode plate 42, and holds the electrolyte solution. Examples of the separator 43 that can be used include a microporous film formed of polyolefin such as polyethylene (PE) or polypropylene (PP). The separator 43 is not limited to a single layer film of polyolefin or the like. The separator may alternatively have a three-layer structure having a polypropylene film held between polyethylene films, or be formed by stacking a polyolefin microporous film and an inorganic microparticle porous film. The thickness of the separator can be set in the range of, for example, 4 to 60 µm.

The package 5 houses the power generating element 4 together with the electrolyte solution. The package 5 is formed by, for example, the laminate film as magnified in Fig. 2. This laminate film includes a metal layer 52 (for example, aluminum layer or the like), a heat-seal layer 51 with an insulating property that can be heat-sealed and that covers one surface of the metal layer (surface of the metal layer 52 on the side where the package 5 houses the power generating element 4), and a protective layer 53 that covers the other surface of the metal layer (outer surface of the package 5). The heat-seal layer 51 is formed of, for example, synthetic resin that can be heat-sealed, such as polypropylene. The protective layer 53 is formed of, for example, synthetic resin with excellent durability, such as polyethylene terephthalate (PET). The structure of the laminate film is not limited to the structure including the metal layer 52 and the synthetic resin layers 51 and 53 formed on the surface of the metal layer 52. For example, the structure of the package 5 may include the synthetic resin layer provided for only the side where the package 5 houses the power generating element 4.

The package 5 is formed by, for example, a laminate film disposed opposite to one major surface of the power generating element 4 illustrated in Fig. 2, and a laminate film disposed opposite to the other major surface thereof. Four sides of the two laminate films are overlapped on each other and heat-sealed, whereby a package container including the package 5 is formed. Note that the package container may alternatively be formed by disposing the power generating element 4 inside the two-folded laminate film, overlapping three sides of the laminate film on each other, and then heat-sealing the overlapped sides.

As illustrated in Fig. 1, a pair of terminals 2 and 3 positioned on the short side of the battery 1 is extracted to the outside through the bonding surface of the package 5 when the package 5 is heat-sealed. In Fig. 1, the pair of terminals 2 and 3 is disposed side by side on the same edge. Alternatively, the positive electrode terminal 2 may be disposed on one edge and the negative electrode terminal 3 may be disposed on the other edge.

The components of the secondary battery are hereinafter described in more detail.

### (Positive electrode active material layer)

The positive electrode active material layer includes the positive electrode active material and binder, and may further include a conductive agent and other additives.

As the positive electrode active material, a lithium manganese oxide (hereinafter referred to as "LMO") and a lithium nickel oxide (hereinafter referred to as "LNO") are included. The mass mixing ratio between LMO and LNO (LMO : LNO) may be in the range of 20 : 80 to 90 : 10, preferably 30 : 70 to 85 : 15. When LMO is contained in the range of 20% to 90% relative to the total mass of LMO and LNO and coated graphite with charge-discharge efficiency of 93.5% or more is used in combination, aging capacity efficiency of 85% or more can be achieved.

LMO is a lithium manganese composite oxide with a spinel structure (including LMO of which Mn site is partly replaced by at least one kind of metal element other than Mn and/or Li). The metal element may be at least one kind of metal element selected from the group consisting of Mg, Al, Fe, Co, Ni, and Cu. For example, LMO represented by the following Formula (1) can be used:

Li₁₊ₐMn₂₋ₓMelₓO₄ ... (1)

(where Me1 is at least one kind of metal element selected from the group consisting of Li, Mg, Al, Fe, Co, Ni, and Cu, "a" satisfies 0 ≤ a < 0.2 and "x" satisfies 0 ≤ x < 2, preferably 0 ≤ x < 0.8).

LNO is a lithium nickel composite oxide with a layered crystal structure (including LNO of which nickel site is partly replaced by at least one kind of metal element other than Ni). The metal element may be at least one kind of metal element selected from the group consisting of Co, Mn, Mg, Al, Fe, Cr, Ti, and In. For example, LNO represented by the following Formula (2) can be used:

Li_{1+b}(Ni_{1-y}Me2_{y})O₂ ... (2)

(where Me2 is at least one kind of metal element selected from the group consisting of Co, Mn, Mg, Al, Fe, Cr, Ti, and In, "b" satisfies -0.5 ≤ b ≤ 0.2 and "y" satisfies 0 ≤ y < 1, preferably 0 ≤ y ≤ 0.6). Me2 may be at least one kind of metal element.

The secondary battery just after being completed is usually in the non-charged state. Charging the battery causes lithium in the positive electrode active material to shift to the negative electrode, and lithium is accumulated in the negative electrode active material. Discharging the battery causes lithium deintercalated from the negative electrode active material to be intercalated into the positive electrode active material again. That is to say, the lithium intercalation ratio of the positive electrode active material returns to the initial lithium quantity during the discharging. The charge-discharge curve is obtained in the graph expressing the amount of lithium in the active material horizontally and the potential of the active material vertically.

Focusing on the charge-discharge curves of LMO and LNO, preferably, the charge-discharge curve of LMO in the region closer to the discharged state to be described below is at the higher position than the charge-discharge curve of LNO in the region closer to the discharged state. Specific description is made below. When the amount of lithium included in LMO is the initial amount expressed by Formula (1) and the amount of lithium included in LNO is the initial amount expressed by Formula (2), the lithium intercalation ratio of each of LMO and LNO is defined as 1. The charge-discharge curves of LMO and LNO are shown in the graph of which horizontal axis (left end: 1, right end: 0) and vertical axis express the lithium intercalation ratio and potential of the active material that change along with the charging and discharging. Here, the compositions are preferably adjusted so that the charge-discharge curve of LMO is at the higher-potential side than the charge-discharge curve of LNO (at the high lithium intercalation ratio side if the potential is the same) in the region closer to the discharged state (specifically, for example, the lithium intercalation ratio is in the range of 0.90 to 0.99).

The average particle diameter of the positive electrode active material is preferably 0.1 to 50 µm, more preferably 1 to 30 µm, and much more preferably 2 to 25 µm from the viewpoint of, for example, the reactivity with the electrolyte solution and the rate characteristics. The average particle diameter of LMO and LNO is preferably 0.1 to 50 µm, more preferably 1 to 30 µm, and much more preferably 2 to 25 µm. Here, the average particle diameter refers to the particle size (medium size: D₅₀) at the integrated value 50% in the particle size distribution (based on volume) according to the laser diffraction method.

Examples of the binder for the positive electrode to be used include binder generally used for the positive electrode, such as polytetrafluoroethylene (PTFE) and polyvinylidene fluoride (PVDF).

The binder is contained in the positive electrode active material layer by preferably 1 to 10 mass%, more preferably 1 to 5 mass%, and much more preferably 2 to 4 mass%. When the amount of binder contained is sufficient, the deterioration of the active material layer can be suppressed in the application for the vehicles or the like where the vibration resistance is required. If the amount of binder contained is excessive, the energy density is decreased and the resistance is increased, so that the transfer of lithium ions in the positive electrode active material layer may become difficult.

Examples of the conductive agent for the positive electrode active material layer to be used include conductive materials generally used as the conductive agent, for example, carbon materials such as carbon black, Ketjen black, and acetylene black. The amount of conductive agent in the positive electrode active material layer can be set in the range of, for example, 1 to 10 mass%.

Examples of other additives for the positive electrode active material layer include compounds for increasing the ion conductivity, such as conductive polymers, for example, polyethylene oxide polymer and polypropylene oxide polymer.

The thickness of the positive electrode active material layer on one side of the current collector is preferably 30 to 100 µm, more preferably 50 to 90 µm. The large thickness is advantageous in point of capacity. However, too large film thickness tends to be disadvantageous in point of input/output characteristics.

The film density of the positive electrode active material layer is set in the range of preferably 2.8 to 3.1 g/cm³, more preferably 2.8 to 3.0 g/cm³ or 2.9 to 3.1 g/cm³, and much more preferably 2.9 to 3.0 g/cm³. The large film density is advantageous in point of capacity. However, too large film density tends to be disadvantageous in point of input/output characteristics. The porosity of the positive electrode active material layer is preferably 20 to 30%. The large porosity is advantageous in point of input/output characteristics. However, too large film porosity leads to the low capacity.

The positive electrode active material layer can be formed as below, for example. First, a slurry including the positive electrode active material, the binder, and the solvent (and conductive agent, if necessary) is prepared. The slurry is applied onto the positive electrode current collector. The applied slurry is dried and pressed if necessary, thereby forming the positive electrode active material layer. The slurry solvent used in the manufacture of the positive electrode may be N-methyl-2-pyrrolidone (NMP).

### (Negative electrode active material layer)

The negative electrode active material layer includes amorphous carbon coated graphite (hereinafter referred to coated graphite) with charge-discharge efficiency of 93.5% or more, as the negative electrode active material, and additionally may include binder, a conductive agent, and other additive.

Examples of the graphite material include natural graphite, synthetic graphite, graphitized mesocarbon microbeads, and graphitized pitch carbon fiber. Any of these graphite materials is coated with amorphous carbon or a low-crystalline non-graphitized carbon material to provide the negative electrode active material. This negative electrode active material has the excellent charge-discharge efficiency. In the present disclosure, coated graphite with charge-discharge efficiency of 93.5% or more is particularly used.

The coated graphite with the excellent charge-discharge efficiency can be formed by the method disclosed in JP-A-2001-143691 in the paragraph of the background art or other public method. For example, the coated graphite including graphite particles coated with non-graphitized carbon layer can be obtained by attaching the amorphous or low-crystalline non-graphitized carbon material on the surface of the graphite particles. In one example, pitch of the graphite particle with the surface coated with the melted pitch is carbonized by burning at 500 to 2000°C. The obtained product is pulverized and classified to provide the coated graphite.

The non-graphitized carbon layer can alternatively be formed by a wet mixing method, a chemical vapor deposition method, or a mechanochemical method. In the chemical vapor deposition method, the carbon source may be hydrocarbon (aliphatic, aromatic, or alicyclic), such as methane, ethane, propane, benzene, toluene, xylene, styrene, naphthalene, or a derivative thereof. In the wet mixing method and the mechanochemical method, the carbon source may be a solid or a dissolved substance of the carbonizable material, such as a polymer compound (for example, phenol resin or styrene resin), or pitch. The process temperature may be 800 to 1200°C in the chemical vapor deposition method and may be 700 to 2000°C in the wet mixing method and the mechanochemical method.

In order to suppress the decrease in charge-discharge efficiency by suppressing the side reaction, the average particle diameter of the negative electrode active material is preferably 1 µm or more, more preferably 2 µm or more, and much more preferably 5 µm or more. Moreover, the average particle diameter is preferably 80 µm or less, more preferably 40 µm or less, from the perspectives of the input/output characteristics and the manufacture of the electrode (flatness of the electrode surface, etc.). Here, the average particle diameter refers to the particle size (medium size: D₅₀) at the integrated value 50% in the particle size distribution (based on volume) according to the laser diffraction method.

The graphite particle is preferably spherical graphite because of the capacity density and the easy preparation of the slurry in the manufacture of the negative electrode active material, and more preferably spherical natural graphite because of the material cost.

The circularity of the spherical graphite is preferably 0.8 or more, more preferably 0.85 or more, and much more preferably 0.9 or more. Through the observation on the particle image with the scanning electron microscope (SEM), the obtained image was analyzed. The analysis provides the circularity as below. The circularity is defined as L/l, where L represents the circumferential length (length of the circumference of the equivalent circle) calculated from the diameter (diameter of the equivalent circle) of the circle (equivalent circle) with the same area as the projected image of the graphite particle on the plane, and 1 represents the actual circumferential length.

The amount of coating of the coated graphite is set so that the secondary battery including the coated graphite has initial charge-discharge efficiency of 93.5% or more. Excessive coating leads to the lower initial charge-discharge efficiency. If the initial charge-discharge efficiency is less than 93.5%, aging capacity efficiency of 85% or more cannot be attained no matter how the LMO : LNO ratio of the positive electrode active material is adjusted. On the other hand, if the amount of coating is insufficient, the initial charge-discharge efficiency is increased but the input/output characteristic may deteriorate.

The initial charging and discharging can be carried out by performing the charging and discharging including at least the initial charging by applying voltage to the manufactured battery under the predetermined condition. In this case, the solid-electrolyte-interface (SEI) can be formed by reducing and decomposing the content of the electrolyte solution on the surface of the negative electrode active material particle. In an example, the amount of coating can be determined in a manner that the residual ratio of the carbon source is determined in advance through the thermogravimetric analysis or the like and this residual ratio and the amount of carbon source used in the manufacture are integrated, and the product of the integration is used as the amount of coating.

The binder used when forming the negative electrode active material layer may be similar to the binder of the positive electrode active material layer. The preferable binder is aqueous binder that can employ water as solvent or dispersant. The aqueous binder may be thermoplastic resin, a polymer compound with rubber elasticity (rubber polymer) or water-soluble polymer. Two or more kinds thereof may be mixed to be used. The binder that can employ water as dispersant may be a polymer compound emulsified in latex, emulsion, or water, or a polymer compound suspended in water.

In regard to the aqueous binder, the water used in the formation of the negative electrode active material layer is inexpensive and handling the water is easy. Moreover, the aqueous binder has other advantages of lower cost for the manufacture facilities and lower environmental burden.

Specific examples of the aqueous binder include the following compounds:
styrene-based polymer compound/rubber polymer (polystyrene, styrene-butadiene rubber, styrene-vinyl acetate copolymer, styrene-acrylic copolymer, etc.)
butadiene-based polymer compound/rubber polymer (acrylonitrile-butadiene rubber, methylmethacrylate-butadiene rubber, styrene-butadiene rubber, polybutadiene, etc.)
(meth)acrylic polymer compound/rubber polymer (polymethylmethacrylate (methylmethacrylate rubber), polyethylacrylate, polyethylmethacrylate, polypropylacrylate, polypropylmethacrylate, polyisopropylacrylate, polyisopropylmethacrylate, polybutylacrylate, polybutylmethacrylate, polyhexylacrylate, polyhexylmethacrylate, polyethylhexylacrylate, polyethylhexylmethacrylate, polylaurylacrylate, polylaurylmethacrylate, etc.)
ethylene and/or propylene polymer (polytetrafluoroethylene, polyethylene, polypropylene, and ethylene-propylene copolymer)
butyl rubber, fluorine rubber, polyethylene oxide, polyepichlorohydrin, polyphosphazene, polyacrylonitrile, ethylene-propylene-diene copolymer (EPR), polyvinylpyridine, chlorosulfonized polyethylene, polyester resin, phenol resin, and epoxy resin.

The water-soluble polymer may be any of the following compounds:
polyvinyl alcohol (average polymerization degree: preferably 200 to 4000, more preferably 1000 to 3000, saponification degree: preferably 80 mol% or more, more preferably 90 mol% or more), a modified body thereof (for example, a product obtained by saponifying 1 to 80 mol% of vinyl acetate units of the copolymer containing ethylene and vinylacetate at a molar ratio of ethylene/vinylacetate = 2/98 to 30/70, or a product obtained by acetalizing 1 to 50 mol% of polyvinyl alcohol)
starch and its modified body (starch oxide, phosphorylated starch, cationized starch)
cellulose derivatives (carboxymethyl cellulose, methyl cellulose, hydroxypropyl cellulose, hydroxyethyl cellulose, and salts thereof)
polyvinylpyrrolidone, polyacrylic acid (or salt thereof), and polyethylene glycol.

Other water-soluble polymers may be the following compounds:
(meth)acrylic amide and/or (meth)acrylic acid salt copolymer ((meth)acrylic amide polymer, (meth)acrylic amide-(meth)acrylic acid salt copolymer, (meth)acrylic acid alkyl (carbon number of 1 to 4)-methacrylic acid salt copolymer, etc.)
styrene-maleic acid copolymer, Mannich modified body of polyacrylic amide, formalin condensed resin (urine-formalin resin, melamine-formalin resin, etc.), polyamide polyamine, dialkylamine-epichlorohydrin copolymer, polyethylene imine, casein, soybean protein, synthesis protein, and mannan galactan derivative.

The aqueous binder preferably contains the rubber polymer from the aspect of the binding property. The rubber polymer is preferably butadiene rubber polymer or (meth)acrylic rubber polymer, more preferably styrene-butadiene rubber (SBR), acrylonitrile-butadiene rubber (NBR), methacrylic acid methyl-butadiene rubber, or methylmethacrylate rubber, and particularly preferably styrene-butadiene rubber.

In the case where the aqueous binder includes the rubber polymer, the water-soluble polymer is preferably used additionally in order to improve the applicability. Examples of the water-soluble polymer include polyvinyl alcohol and a modified body thereof, starch and a modified body thereof, a cellulose derivative, polyvinylpyrrolidone, polyacrylic acid and salts thereof, and polyethylene glycol. Among these, the cellulose derivative is preferable, and carboxymethyl cellulose is more preferable.

If the water-soluble polymer and the rubber polymer are used in combination, the mass mixing ratio (rubber polymer/water-soluble polymer) is preferably 0.3/1 to 3/1, more preferably 1/1 to 3/1.

The amount of binder contained in the negative electrode active material (if the water-soluble polymer and the rubber polymer are used in combination, the total amount thereof) is preferably 1 to 10 mass%, more preferably 1 to 5 mass%, much more preferably 2 to 5 mass%, and particularly preferably 2.5 to 3.5 mass% relative to the entire mass of the negative electrode active material layer. When the binder is thusly contained in relatively large amount, the deterioration of the active material layer can be suppressed in the application for the vehicles and the like where the vibration resistance is required. However, containing too much binder makes it difficult for lithium ions to transfer, in which case the desired low-temperature characteristic is obtained less easily.

The conductive agent for the negative electrode active material layer may be the conductive material that is generally used as the conductive agent, such as carbon materials including carbon black, Ketjen black, and acetylene black. The amount of conductive agent in the negative electrode active material layer can be set to, for example, 1 to 10 mass%.

Examples of other additives for the negative electrode active material layer include compounds that can increase the ion conductivity, such as conductive polymers, for example, polyethylene oxide polymer and polypropylene oxide polymer.

The thickness of the negative electrode active material layer on one side of the current collector is preferably 40 to 80 µm, more preferably 50 to 70 µm. The large thickness is advantageous in point of capacity. On the other hand, the film thickness exceeding the above range is disadvantageous in point of the input/output characteristics.

The film density of the negative electrode active material layer is set in the range of preferably 1.2 to 1.7 g/cm³, more preferably 1.3 to 1.6 g/cm³, much more preferably 1.2 to 1.5 g/cm³, and particularly preferably 1.3 to 1.5 g/cm³. The large film density is advantageous in point of capacity. However, too large film density is disadvantageous in point of input/output characteristic. The porosity of the negative electrode active material layer is preferably 25 to 37%. Too small porosity makes it difficult for lithium ions to transfer, in which case the desired low-temperature characteristic is obtained less easily. On the other hand, too large porosity leads to the smaller capacity.

The negative electrode active material layer can be formed as below, for example. First, a slurry including the negative electrode active material, the binder, and the solvent is prepared. The slurry is applied onto the negative electrode current collector. The applied slurry is dried and pressed as necessary, thereby forming the negative electrode.

Alternatively, the negative electrode can be formed in a manner that the negative electrode active material layer is formed first and then a thin film to serve as the current collector is formed by a vapor deposition method, a CVD method, or a sputtering method.

### (Electrolyte solution)

A preferred example of the electrolyte solution to be used for the secondary battery according to the embodiment of the present disclosure is a nonaqueous electrolyte solution obtained by dissolving the lithium salt in an organic solvent.

As the organic solvent, the combination of cyclic carbonate and linear carbonate is preferably used. Examples of the cyclic carbonate include ethylene carbonate, propylene carbonate, and fluoroethylene carbonate. Examples of the linear carbonate include dimethyl carbonate, diethyl carbonate, and ethylmethyl carbonate. The mixing ratio of the cyclic carbonate to the linear carbonate (cyclic carbonate/linear carbonate) is preferably 1/9 to 4/6, more preferably 1/9 to 3/7, much more preferably 2/8 to 4/6, and particularly preferably 2/8 to 3/7 in volume ratio. The mixing ratio set within this range can contribute to the improvement of the low-temperature characteristic as shown in the evaluation results in Examples below.

In addition to the cyclic carbonate and the linear carbonate, the nonaqueous electrolyte solution may contain other organic solvents (such as carboxylic acid esters, ethers, and other aprotic organic solvents). However, the total amount of cyclic carbonate and linear carbonate is preferably 80 vol% or more (80 to 100 vol%), more preferably 90 vol% or more (90 to 100 vol%) relative to the entire organic solvent.

Examples of the lithium salt include LiPF₆, LiBF₄, LiCF₃SO₃, LiC₄F₉SO₃, LiN(CF₃SO₂)₂, and LiC(CF₃SO₂)₃. Among these, the preferable lithium salt is LiPF₆ and LiBF₄ with high ion conductivity. These are known as the lithium salt that can generate acid. Using such compounds leads to a problem that lithium elutes manganese out of LMO. However, even if lithium salt, which can generate acid, is used for the nonaqueous electrolyte secondary battery according to the embodiment of the present disclosure, the predetermined effect can be obtained as described below. In the present disclosure, the concentration of the lithium salt is set to 0.8 to 1.2 mol/L, preferably 0.9 to 1.1 mol/L. The sufficiently high concentration of lithium salt is advantageous in improving the low-temperature characteristics. If the concentration of lithium salt is too high over the above range, however, the viscosity of the electrolyte solution tends to increase. In order to secure the permeability into the pores of the positive electrode and the negative electrode, the lithium salt concentration is preferably set within the above range.

The electrolyte solution may contain an additive. The additive can preferably form a film derived from the additive on the surface of the negative electrode active material. Examples of the additive include carbonate additives such as vinylene carbonate (VC), 4-methylvinylene carbonate, 4,5-dimethylvinylene carbonate, 4-ethylvinylene carbonate, 4,5-diethylvinylene carbonate, 4-propylvinylene carbonate, 4,5-dipropylvinylene carbonate, 4-phenylvinylene carbonate, 4,5-diphenylvinylene carbonate, vinylethylene carbonate (VEC), divinylethylene carbonate and other carbonates with the unsaturated bond, and halogenated carbonates of which hydrogen atoms are partly replaced by fluorine atoms such as ethylene carbonate and propylene carbonate. Other examples include sulfur additives such as sultone, for example propane sultone, linear or cyclic sulfonic acid ester, and linear or cyclic disulfonic acid ester. Among these, preferred examples are vinylene carbonate, vinylethylene carbonate, divinylethylene carbonate, sultone, cyclic sulfonic acid ester, cyclic disulfonic acid ester, and fluoroethylene carbonate. Any of these additives may be used alone, or two or more kinds thereof may be used in combination. The additive preferably contains at least the sulfur additive as a necessary component. The concentration of additive in the electrolyte solution is preferably 0.1 mass% to 5 mass%, preferably 0.5 to 2.5 mass%. These additives can contribute to the improvement of the cycle characteristics. However, if the additive is contained too much, the increase in DC resistance may be concerned.

### [Examples]

### (Example 1)

The positive electrode was manufactured as below. The powder of a lithium manganese composite oxide (Li_{1.1}Mn_{1.9}O₄ of which Mn site has been replaced by a small amount of Mg and Al) with a spinel structure (D₅₀ = 10 µm) as LMO in the positive electrode active material, and the powder of a lithium nickel composite oxide (LiNi_{0.8}Co_{0.1}Mn_{0.1}O₂) with a layered crystal structure (D₅₀ = 12 µm) as LNO in the positive electrode active material were mixed at a mass ratio (LMO/LNO) = 85/15. To this positive electrode active material, polyvinylidene fluoride as the binder and carbon black powder as the conductive agent were added at a predetermined proportion. This mixture was dispersed uniformly in the solvent N-methyl-2-pyrrolidone (NMP), thereby preparing a slurry. The obtained slurry was applied on a 20-µm-thick aluminum foil as a positive electrode current collector. After that, NMP was vaporized to form the positive electrode active material layer on one surface of the positive electrode current collector. The binder was contained in the positive electrode active material layer (layer formed on one surface of the current collector) by 4 mass%. Similarly, the positive electrode active material layer was formed on the other surface of the positive electrode current collector. After that, the positive electrode active material layer was pressed, thereby providing the targeted positive electrode plate. The thickness of the pressed positive electrode active material layer was 81 µm (thickness on one surface side), the film density thereof was 2.96 (g/cm³), and the porosity thereof was 24%.

The negative electrode was manufactured through the procedure below. The powder of spherical natural graphite coated with the amorphous carbon (initial charge-discharge efficiency: 95%, average particle size D₅₀: 18 µm) as the negative electrode active material, the carbon black as the conductive agent, and styrene butadiene rubber (SBR) and carboxymethyl cellulose (CMC) as the binder were prepared. These were uniformly dispersed at a predetermined proportion in a CMC aqueous solution, thereby preparing a slurry. The obtained slurry was applied to a 10-µm-thick copper foil as the negative electrode current collector. After that, water was vaporized to form the negative electrode active material layer on one surface of the negative electrode current collector. Similarly, the negative electrode active material layer was formed on the other surface of the negative electrode current collector. After that, the negative electrode active material layer was pressed, thereby providing the targeted negative electrode plate. The thickness of the pressed negative electrode active material layer was 66 µm (thickness on one surface side). SBR and CMC were contained in the negative electrode active material layer by 2 mass% and 1 mass%, respectively.

The positive electrode plate and the negative electrode plate were cut, while leaving the current collector extension parts where the active material was not applied. Thus, the positive electrode plate and the negative electrode plate with a predetermined size were obtained.

Next, the positive electrode plate (17 plates), the negative electrode plates (18 plates), and the separators formed of polyethylene and polypropylene were alternately stacked so that the positive electrode active material layer and the negative electrode active material layer were disposed opposite to each other and overlapped on each other. Thus, the power generating element was obtained.

Next, an inward end (one end portion) of the negative electrode terminal was bonded to the extension part of the negative electrode current collector of the negative electrode plate. Similarly, an inward end (one end portion) of the positive electrode terminal was bonded to the extension part of the positive electrode current collector of the positive electrode plate. This power generating element was covered with the laminate film constituting the package. Next, four sides around the package were heat-sealed leaving a relatively small filling port. Thus, the package container including the power generating element was formed. After that, the electrolyte solution described below was poured through the filling port and then the pressure in the package container was reduced. After that, the filling port was heat-sealed, thereby hermetically sealing the package container. The laminate film was heat-sealed in a state that the positive electrode terminal and the negative electrode terminal were extracted from one of the four sides of the package container. The distance between the heat-sealed portion and the power generating element was 15 mm at the side where the terminals were extracted and 5 mm at the other sides.

As the electrolyte solution, the solution containing 1 mol/L of LiPF₆ as the electrolyte salt, the mixed solvent of ethylene carbonate and diethyl carbonate (volume ratio 30 : 70, cyclic carbonate/linear carbonate = 30/70) as the solvent, and 1 mass% of vinylene carbonate and 1 mass% of cyclic disulfonic acid ester as the additive was used.

### (Examples 2 to 11, Comparative Examples 1 to 11)

The cells were manufactured through the same procedure as that of Example 1 except that the positive electrode LMO ratio and the negative electrode active material to be used (initial charge-discharge efficiency) were changed as shown in Table 1.

Next, the aging capacity efficiency of the manufactured cell was evaluated as below. First, in the initial charging step, the constant-current charging (CC) was carried out at a current rate of 0.2 C up to 4.15 V. After that, the battery was charged at the constant voltage (CV) for 6.5 hours in total. The current integrated value of this charging was recorded as the initial charging capacity. Next, in the aging step, the cell was left in the 45°C environment for two weeks. After that, in the discharging capacity measurement step, the constant-current discharging was carried out at a current rate of 0.2 C to 2.5 V. The discharging capacity was measured based on the current integrated amount in this discharging. The value obtained by dividing this discharging capacity by the initial charging capacity was defined as the aging capacity efficiency.

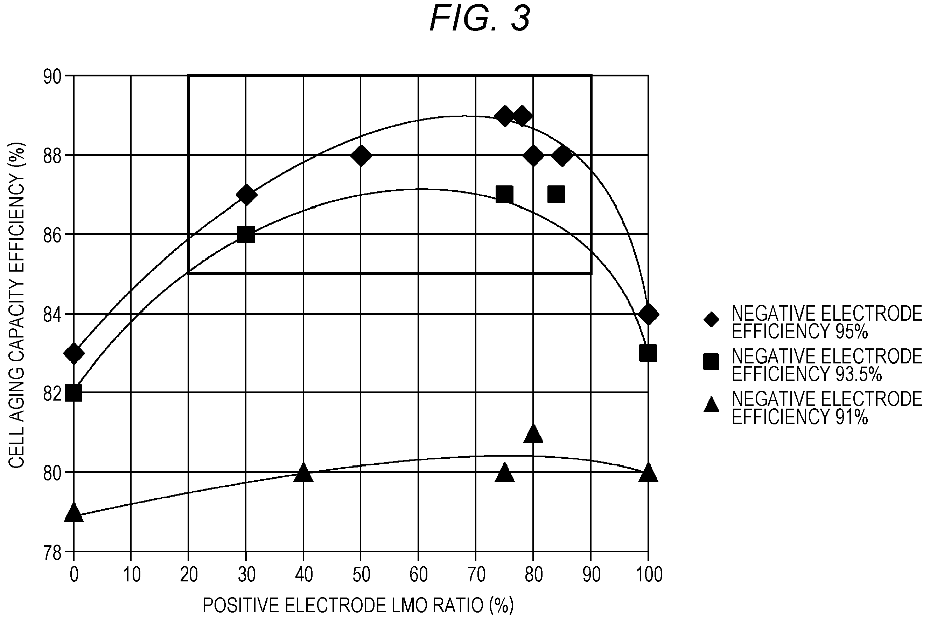

Fig. 3 shows the results of the aging capacity efficiency of the nonaqueous electrolyte secondary battery after being left at 45°C for two weeks. The tendency remains the same in the room-temperature aging. Among the samples examined this time, if the negative electrode includes the negative electrode material with initial charge-discharge efficiency of 93.5% and 95%, the battery sample with a positive electrode LMO ratio ranging from 30% to 85% exhibits the high aging capacity efficiency. The specific reasons why this occurs are unknown but the following may be assumed. In the discharging capacity measurement step after the aging, the discharging ends when the battery voltage, i.e., the potential difference between the positive electrode and the negative electrode has reached a predetermined voltage. On this occasion, using the negative electrode with the high initial charge-discharge efficiency makes it possible to use the lithium intercalation region of LMO, which has conventionally been unused, on the eve of the end of the discharging. This increases the discharging capacity so that the high aging capacity efficiency is exhibited. In Fig. 3, the aging capacity efficiency goes up until the positive electrode LMO ratio reaches 80%, and after that the efficiency goes down. In the aging step, since the amount of LNO is small, LMO easily deteriorates due to the electrolyte solution and this causes the problem as above. The reason is considered as below. The electrolyte solution includes LiPF₆. This is the lithium salt that can generate acid. Therefore, as long as

LNO is contained by at least a certain degree, the acid is trapped thereby. However, if LNO is contained by less than a preferred amount, the acid is not trapped sufficiently. This easily causes the acid to operate on LMO and elutes the manganese. As shown by Fig. 3, aging capacity efficiency of 85% or more is attained when the negative electrode has initial charge-discharge efficiency of 93.5% or more and the positive electrode LMO ratio is in the range of 20% to 90% (within the thick frame).

**[Table 1]**

| | Positive electrode LMO ratio (%) | Negative electrode active material Initial charge-discharge efficiency (%) | Aging capacity efficiency of cell (%) |
|---|---|---|---|
| Example 1 | 85 | 95 | 88 |
| Example 2 | 80 | 95 | 88 |
| Example 3 | 78 | 95 | 89 |
| Example 4 | 75 | 95 | 89 |
| Example 5 | 50 | 95 | 88 |
| Example 6 | 30 | 95 | 87 |
| Example 7 | 84 | 94.5 | 88 |
| Example 8 | 75 | 94.5 | 89 |
| Example 9 | 84 | 93.5 | 87 |
| Example 10 | 75 | 93.5 | 87 |
| Example 11 | 30 | 93.5 | 86 |
| Comparative Example 1 | 100 | 95 | 84 |
| Comparative Example 2 | 0 | 95 | 83 |
| Comparative Example 3 | 100 | 93.5 | 83 |
| Comparative Example 4 | 0 | 93.5 | 82 |
| Comparative Example 5 | 100 | 91 | 80 |
| Comparative Example 6 | 80 | 91 | 81 |
| Comparative Example 7 | 75 | 91 | 80 |
| Comparative Example 8 | 40 | 91 | 80 |
| Comparative Example 9 | 0 | 91 | 79 |
| Comparative Example 10 | 30 | 93 | 83 |
| Comparative Example 11 | 0 | 93 | 82 |

The nonaqueous electrolyte secondary battery according to the embodiment of the present disclosure may be any of the following first to third nonaqueous electrolyte secondary batteries.

The first nonaqueous electrolyte secondary battery is a nonaqueous electrolyte secondary battery including: a negative electrode including, as a negative electrode active material, amorphous carbon coated graphite with charge-discharge efficiency of 93.5% or more; and
a positive electrode including a positive electrode active material including a mixture containing a lithium manganese oxide (LMO) and a lithium nickel oxide (LNO) at a mass ratio (LMO : LNO) of 20 : 80 to 90 : 10.

The second nonaqueous electrolyte secondary battery is the first nonaqueous electrolyte secondary battery, wherein the mass ratio of the positive electrode active material (LMO : LNO) is 30 : 70 to 85 : 15.

The third nonaqueous electrolyte secondary battery is the first or second nonaqueous electrolyte secondary battery, wherein the LMO is a spinel type lithium manganese composite oxide represented by the following composition formula (1) and the LNO is a lithium nickel composite oxide with a layered crystal structure represented by the following composition formula (2):

Li₁₊ₐMn₂₋ₓMe1ₓO₄ ... (1)

(where Me1 is at least one kind of element selected from the group consisting of Li, Mg, Al, Fe, Co, Ni, and Cu, "a" satisfies 0 ≤ a < 0.2 and "x" satisfies 0 ≤ x < 2)

Li_{1+b}(Ni_{1-y}Me2_{y})O₂ ... (2)

(where Me2 is at least one kind of metal element selected from the group consisting of Co, Mn, Mg, Al, Fe, Cr, Ti, and In, "b" satisfies -0.5 ≤ b ≤ 0.2 and "y" satisfies 0 ≤ y < 1).

The foregoing detailed description has been presented for the purposes of illustration and description. Many modifications and variations are possible in light of the above teaching. It is not intended to be exhaustive or to limit the subject matter described herein to the precise form disclosed. Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims appended hereto.

## Claims

1. A nonaqueous electrolyte secondary battery comprising:
a negative electrode including, as a negative electrode active material, amorphous carbon coated graphite with charge-discharge efficiency of 93.5% or more; and
a positive electrode including a positive electrode active material including a mixture containing a lithium manganese oxide (LMO) and a lithium nickel oxide (LNO) at a mass ratio (LMO : LNO) of 20 : 80 to 90 : 10.

2. The nonaqueous electrolyte secondary battery according to claim 1, wherein the mass ratio between LMO and LNO (LMO : LNO) is 30 : 70 to 85 : 15.

3. The nonaqueous electrolyte secondary battery according to claim 1 or 2, wherein the LMO is a spinel type lithium manganese composite oxide represented by the following composition formula (1) and the LNO is a lithium nickel composite oxide with a layered crystal structure represented by the following composition formula (2):
Li₁₊ₐMn₂₋ₓMe1ₓO₄ ... (1)
(where Me1 is at least one kind of element selected from the group consisting of Li, Mg, Al, Fe, Co, Ni, and Cu, "a" satisfies 0 ≤ a < 0.2 and "x" satisfies 0 ≤ x < 2)
Li_{1+b}(Ni_{1-y}Me2_{y})O₂ ... (2)
(where Me2 is at least one kind of metal element selected from the group consisting of Co, Mn, Mg, Al, Fe, Cr, Ti, and In, "b" satisfies -0.5 ≤ b ≤ 0.2 and "y" satisfies 0 ≤ y < 1).
